# EUROPÄISCHE PATENTSCHRIFT

(11) **EP 0 827 240 B1**
(45) Veröffentlichungstag und Bekanntmachung des Hinweises auf die Patenterteilung: **08.03.2000**
(21) Anmeldenummer: 97111502.7
(22) Anmeldetag: 08.07.1997
(51) Int. Cl.: H01R 12/22, G06K 7/00, H01R 12/04

(54) **Kontaktträger**
Contact support
Support de contact

(30) Priorität: 27.08.1996 DE 19634565
(43) Veröffentlichungstag der Anmeldung: 04.03.1998
(73) Patentinhaber: AMPHENOL-TUCHEL ELECTRONICS GmbH, D-74080 Heilbronn (DE)
(72) Erfinder: Reichardt, Manfred, 74189 Weinsberg (DE); Braun, Gerhard, 74626 Blitzfeld (DE)
(74) Vertreter: Becker, Thomas, Dr., Dipl.-Ing.

(56) Entgegenhaltungen:
- EP-A- 0 420 407
- EP-A- 0 480 334
- DE-U- 9 410 349
- US-A- 5 378 160

## Beschreibung

Die Erfindung betrifft einen Kontaktträger aus einem Isolierkörper und darin positionierten Kontakten, der als Bestandteil einer Kontaktiereinrichtung für einen Chipkartenleser auf einer Leiterplatte angeordnet werden kann und dessen Kontakte dann mit korrespondierenden Kontakten einer zugehörigen Chipkarte in einer Lesestellung der Chipkarte kontaktierbar sind.

Üblicherweise weist jeder Kontakt ein über den Isolierkörper vorstehendes Kontaktende und ein über den Isolierkörper vorstehendes Anschlußende auf. Die Anschlußenden werden - wie sich beispielsweise der EP 0 480 334 A1 entnehmen läßt - auf den entsprechenden Kontaktstreifen der Leiterplatte gelötet. Dabei können die Anschlußenden durch entsprechende Öffnungen in die Leiterplatte gesteckt werden. Ebenso ist es möglich, die Anschlußenden unmittelbar auf der zugehörigen Kontaktseite der Leiterplatte zu befestigen.

Um eine sichere Befestigung und damit Kontaktierung zwischen den Kontakten des Kontaktträgers und den korrespondierenden Kontaktstreifen auf der Leiterplatte sicherzustellen ist es notwendig, daß die einzelnen Anschlußenden der Kontakte absolut koplanar verlaufen. Schon kleine Ebenheitstoleranzen (Parallelität, Rechtwinkligkeit, Neigung, Position) können dazu führen, daß insbesondere bei einer automatischen Bestückung im Rahmen einer SMD-Technik die Lötverbindungen keine hundertprozentige Kontaktverbindung schaffen.

Entsprechend liegt der Erfindung die Aufgabe zugrunde, einen Kontaktträger der genannten Art anzubieten, der hinsichtlich seiner Kontaktenden (Anschlußenden) eine möglichst hundertprozentige Koplanarität schafft.

Aus der US 5,378,160 A ist es bekannt, die Kontakte in Isolierkörper festzulegen und die Kontaktenden (Anschlußenden) um die Außenfläche des Kontaktträgers umzubiegen. Aufgrund der Federwirkung der Kontakte besteht aber auch bei dieser Art der Konfektionierung der Kontakte im Kontaktkörper die Gefahr, daß die gewünschte Koplanarität nicht erreicht wird.

Dem gegenüber sieht die Erfindung bei einem Kontaktträger der genannten Art vor, die Anschlußenden der Kontakte unter Vorspannung auf korrespondierenden Abschnitten des Isolierkörpers unter Ausbildung koplanarer Kontaktflächen aufzubringen.

Dabei kommt dem Gesichtspunkt der Vorspannung besondere Bedeutung zu. Die Anschlußenden können so unter zumindest teilweiser Überwindung der Vorspannung auf die zugehörigen Abschnitte des Isolierkörpers aufgesetzt oder aufgesteckt werden, so daß die auf der Leiterplatte zu lötenden Endbereiche der Kontakte untereinander exakt koplanar verlaufen.

Nach einer Ausführungsform weisen die Kontakte zwischen ihrem jeweiligen Anschlußende und ihrem Kontaktende einen, in einer korrespondierenden Aufnahme des Isolierkörpers verlaufenden Führungsabschnitt auf. Dieser Führungsabschnitt sichert nicht nur die Positionierung des einzelnen Kontaktes, sondern auch die Parallelität der Kontakte untereinander.

Dabei sind die Anschlußenden schlaufenförmig umgebogen und zwar vorzugsweise über einen Winkel von 180° hinaus. Die Kontakte können in diesem Fall unter Überwindung der so ausgebildeten Vorspannung der freien Enden der Anschlußbereiche der Kontakte auf die korrespondierende Abschnitte des Isolierkörpers aufgeschoben (aufgesteckt) werden. Dabei werden die freien Kontaktenden - entgegen der Vorspannung - teilweise zurückgebogen. Im Ergebnis liegen die Anschlußenden und insbesondere die freien Enden der Kontakte absolut flächig und koplanar zueinander auf der Außenfläche des Kontaktträgers auf, wobei sie - wie ausgeführt - den Kontaktträger zumindest geringfügig überragen, so daß sie anschließend sicher auf den zugehörigen Kontaktstreifen der Leiterplatte gelötet werden oder gegen die Kontakte der Leiterplatte festgelegt werden können.

Die exakte Positionierung der Kontakte wird dadurch gefördert, daß nach einer weiteren Ausführungsform die mit den Kontakten in Berührung stehenden Flächenabschnitte des Isolierkörpers zumindest teilweise gegenüber benachbarten Flächenabschnitten höhenmäßig versetzt verlaufen. Dies kann konkret beispielsweise dadurch erfolgen, indem im Isolierkörper entsprechende Führungsnuten für die Kontakte ausgebildet werden, in denen die Kontakte dann formschlüssig einliegen.

Grundsätzlich können die Kontakte innerhalb und außerhalb des Isolierkörpers auf unterschiedliche Art und Weise verlaufen. Die im nachfolgenden Ausführungsbeispiel dargestellte Variante beschreibt einen Kontakt, der mäanderförmig abgewinkelt ist.

Dabei sind die Kontakte zwischen ihrem Anschlußende und ihrem Kontaktende mit einem Widerlager ausgebildet, welches entgegengesetzt zum Anschlußende der Kontakte wirkt, um eine Relativverschiebung der Kontakte zu verhindern. Das Widerlager kann dabei zum Beispiel durch eine Zunge ausgebildet werden, die aus dem Kontaktmaterial ausgeschnitten (ausgestanzt) wird und unter einem Winkel zu dem entsprechenden Kontaktabschnitt verläuft.

Vorstehend wurde bereits auf eine Ausführungsform hingewiesen, bei der die Anschlußenden der Kontakte schlaufenförmig (U-förmig) umgebördelt sind. Um das Aufstecken der Anschlußenden auf die korrespondierenden Abschnitte des Kontaktträgers zu erleichtern sieht eine weitere Ausführungsform der Erfindung vor, daß der das Anschlußende eines Kontaktes aufnehmende Abschnitt des Isolierkörpers stirnseitig abgerundet oder abgeflacht ausgebildet ist. Dadurch wird das Aufstecken des Kontaktes - entgegen der Vorspannung des Kontaktendes - ebenso wie die Positionierung des Kontaktes selbst erleichtert. Auch diese konstruktive Gestaltung wird in den nachfolgenden Ausführungsbeispielen näher erläutert.

Das gleiche Ergebnis wird alternativ oder kumulativ durch eine Abrundung oder Abschrägung des freien Endes der Anschlußenden der Kontakte erreicht.

Insgesamt ergibt sich ein äußerst einfach aufgebauter Kontaktträger, der eine exakte Positionierung der Kontakte ermöglicht und bei dem insbesondere die Anschlußenden der Kontakte absolut koplanar ausgebildet sind.

Damit läßt sich der beschriebene Kontaktträger besonders vorteilhaft in der an sich bekannten SMD (SMT) Technologie auf einer zugehörigen Leiterplatte konfektionieren. Der SMD Lötanschluß kann platzsparend auch innerhalb des Kontaktträgers erfolgen.

Weitere Merkmale der Erfindung zeigen die Merkmale der Unteransprüche sowie die sonstigen Anmeldungsunterlagen.

Die Erfindung wird nachstehend anhand eines Ausführungsbeispieles näher erläutert. Dabei zeigen - jeweils in schematisierter Darstellung -
- Figur 1:: einen Einzelkontakt für einen erfindungsgemäßen Kontaktträger in einer Seitenansicht,
- Figur 2:: eine Seitenansicht eines mit den Kontakten nach Figur 1 bestückten Kontaktträgers,
- Figur 3:: den Bereich zwischen dem Anschlußende eines Kontaktes und dem zugehörigen Abschnitt des Kontaktträgers in vergrößerter Darstellung.

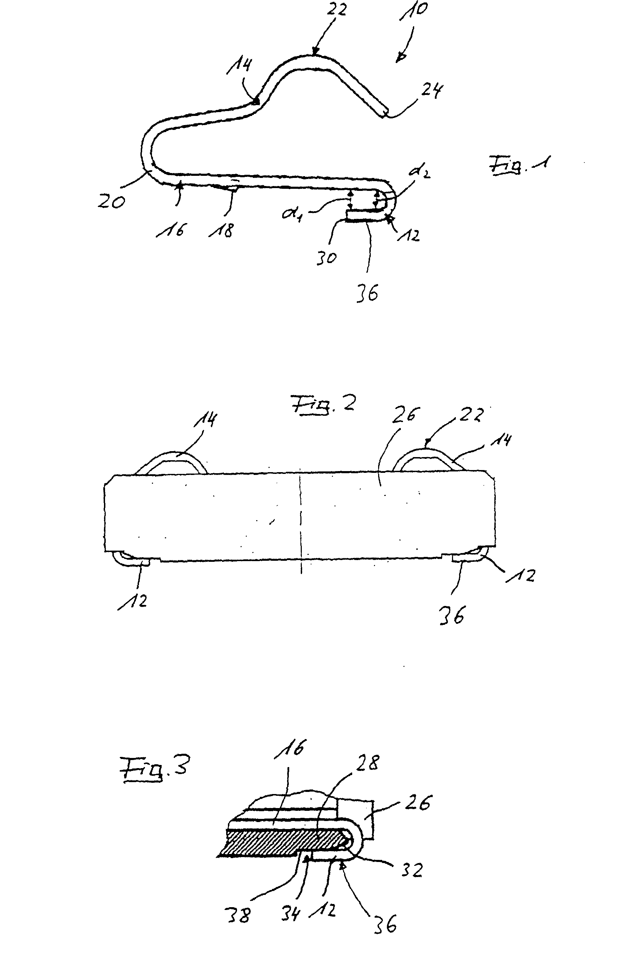

In Figur 1 ist ein Kontakt 10 dargestellt, der ein Anschlußende 12, ein Kontaktende 14 sowie einen zwischen Anschlußende 12 und Kontaktende 14 verlaufenden Führungsabschnitt 16 aufweist.

Das Anschlußende 12 ist schlaufenförmig umgebogen, wobei der Abstand zwischen den korrespondierenden Flächenabschnitten am freien Ende (d1) kleiner ist als im Umbiegungsbereich (d2).

Etwa in der Mitte des Führungsabschnittes 16 ist eine nach unten abgebogene Zunge 18 aus dem Führungsabschnitt 16 ausgestanzt.

Entgegengesetzt zum Anschlußende 12 ist der Kontakt 10 zwischen Führungsabschnitt 16 und Kontaktende 14 umgebogen (Krümmung 20). Das Kontaktende 14 selbst verläuft wellenartig unter Ausbildung einer gekrümmten Kontaktfläche 22 zwischen dem Krümmungsbereich 14 und dem freien Ende 24 des Kontaktendes 14.

Eine Vielzahl der in Figur 1 dargestellten und aus elektrisch leitfähigem Material bestehenden Kontakte 10 sind nebeneinander und parallel zueinander in einem Kontaktträger 26 angeordnet, wie er in Figur 2 dargestellt ist.

Dabei verlaufen die Kontakte 10 in entsprechenden (nicht dargestellten) Aussparungen (Führungsnuten) innerhalb des aus Isoliermaterial bestehenden Kontaktträgers (nachstehend Isolierkörper genannt) 26.

Zu erkennen ist, daß sowohl die Kontaktflächen 22 als auch die Anschlußenden 12 jedes Kontaktes 10 über den Isolierkörper 26 hinausragen.

Figur 3 zeigt in vergrößerter Darstellung den Verbindungsbereich zwischen Anschlußende 12 und einem zugehörigen Abschnitt 28 des Isolierkörpers 26. Zu erkennen ist, daß der Kontakt 10 mit seinem schlaufenförmigen Anschlußende 12 auf den entsprechenden Abschnitt 28 seitlich aufgesteckt ist. Um das Aufstecken zu erleichtern ist der Abschnitt 28 außenseitig "angespitzt" gestaltet, so daß das freie Ende des Anschlußendes 12 unter Überwindung der Vorspannung des Anschlußendes 12 entlang der Schrägfläche 32 in eine isolierkörperseitige Vertiefung 34 geführt werden kann, und zwar derart, daß die Kontaktfläche 36 des Kontaktes 10 exakt parallel zum Boden 38 der Vertiefung 34 verläuft. Nunmehr gilt: d₁ = d₂ = Dicke des Abschnitts 28. Aufgrund identischer Ausbildung sämtlicher Abschnitte 28 zur Aufnahme der Kontakte 10 ergibt sich daraus unmittelbar eine exakte Koplanarität der Kontaktflächen 36 der Kontakte 10 untereinander.

Dies ermöglicht eine Bestückung des Kontaktträgers 26 mit seinen Kontakten 10 auf einer zugehörigen Leiterplatte (nicht dargestellt) mit extrem hoher Präzision. Alle Kontaktflächen 36 der Kontakte 10 sind aufgrund der beschriebenen Konfektionierung der Kontakte 10 im Kontaktträger 26 absolut koplanar.

## Patentansprüche

1. Kontaktträger aus einem Isolierkörper (26) und darin positionierten Kontakten (10), wobei jeder Kontakt (10) über den Isolierkörper (26) vorstehende Kontakt- und Anschlußenden (14, 12) aufweist und die Anschlußenden (12) der Kontakte (10) auf korrespondierenden Abschnitten (28) des Isolierkörpers (26) aufsitzen, dadurch gekennzeichnet, daß die Anschlußenden (12) der Kontakte (10) schlaufenförmig umgebogen sind und unter Vorspannung auf den Abschnitten (28) des Isolierkörpers unter Ausbildung koplanarer Kontaktflächen (36) aufsitzen.

2. Kontaktträger nach Anspruch 1, bei dem die Kontakte (10) zwischen ihrem Anschlußende (12) und ihrem Kontaktende (14) einen, in einer korrespondierenden Aufnahme des Isolierkörpers (26) verlaufenden Führungsabschnitt (16) aufweisen.

3. Kontaktträger nach Anspruch 1, bei dem die mit den Kontakten (10) in Berührung stehenden Flächenabschnitte des Isolierkörpers (26) zumindest teilweise gegenüber benachbarten Flächenabschnitten höhenmäßig versetzt verlaufen.

4. Kontaktträger nach Anspruch 3, bei dem die mit den Kontakten (10) in Berührung stehenden Flächenabschnitte des Isolierkörpers (26) zumindest teilweise als Führungsnuten ausgebildet sind, in denen die Kontakte (10) formschlüssig einliegen.

5. Koncaktträger nach Anspruch 1 mit einem zum Anschlußende (12) der Kontakte (10) entgegengesetzt wirkenden Widerlager (18) für jeden Kontakt (10).

6. Kontaktträger nach Anspruch 5, bei dem die Widerlager (18) als aus den Kontakten (10) ausgeformce Zungen ausgebildet sind.

7. Kontaktträger nach Anspruch 1, bei dem der das Anschlußende (12) eines Kontaktes (10) aufnehmende Abschnitt (28) des Isolierkörpers (26) und/oder das freie Anschlußende der Kontakte (12) stirnseitig abgerundet oder abgeflacht ausgebildet ist.

8. Kontaktträger nach Anspruch 1, bei dem die Anschlußenden (12) auf den Isolierkörper (26) aufgesteckt sind.

## Claims

1. A contact carrier of an insulating body (26) and contacts (10) positioned therein, each contact (10) having contact and connection ends (12, 14) projecting beyond the insulating body (26) and the connection ends (12) of the contacts (10) resting on corresponding portions (28) of the insulating body (26) characterized in that the connection ends (12) of the contacts (10) are bent into loop-shape and are resting under prestress on said portions (28) of the insulating body (26) while forming coplanar contact surfaces (36).

2. The contact carrier according to claim 1, wherein the contacts (10) have a guide portion (16) between their connection end (12) and their contact end (14), which extends within a corresponding seat of the insulating body (26).

3. The contact carrier according to claim 1, wherein the surface portions of the insulating body (26) contacting the contacts (10) are at least partially offset in height with regard to adjacent surface portions.

4. The contact carrier according to claim 3, wherein the surface portions of the insulating body (26) contacting the contacts (10) are at least partially formed as guiding grooves, in which the contacts (10) lie, having positive fit.

5. The contact carrier according to claim 1, having an abutment (18) for each contact (10), acting in opposite direction to the connection end (12) of the contacts (10) .

6. The contact carrier according to claim 5, wherein the abutments (18) are formed as tongues shaped from the contacts (10).

7. The contact carrier according to claim 1, wherein the portion (28) of the insulating body (26) receiving the connection end (12) of a contact (10) and/or the free connection end of the contacts (12) is rounded or flattened on the face.

8. The contact carrier according to claim 1, wherein the connection ends (12) are put onto the insulating body (26).

## Revendications

1. Porte-contacts formé par un corps isolant (26) et des contacts (10) positionnés dans celui-ci, dans lequel chaque contact (10) comporte des extrémités de contact et de connexion (14, 12) en saillie au-dessus du corps isolant (26) et les extrémités de connexion (12) des contacts (10) sont en appui sur des parties (28) correspondantes du corps isolant (26), caractérisé en ce que les extrémités de connexion (12) des contacts (10) sont recourbées en forme de boucle et sont en appui sous précontrainte sur les parties (28) du corps isolant en formant des surfaces de contact (36) coplanaires.

2. Porte-contacts selon la revendication 1, dans lequel les contacts (10), entre leur extrémité de connexion (12) et leur extrémité de contact (14), sont munis d'une partie de guidage (16) qui s'étend dans un logement correspondant du corps isolant (26).

3. Porte-contacts selon la revendication 1, dans lequel les parties de la surface du corps isolant (26), qui sont en contact avec les contacts (10), sont, au moins en partie, décalées en hauteur par rapport aux parties contiguës de la surface.

4. Porte-contacts selon la revendication 3, dans lequel les parties de la surface du corps isolant (26) qui sont en contact avec les contacts (10) sont, au moins en partie, réalisées en forme de rainures de guidage dans lesquelles les contacts (10) s'insèrent par conjugaison de forme.

5. Porte-contacts selon la revendication 1, comprenant une butée (18) pour chaque contact (10), agissant dans le sens opposé par rapport à l'extrémité de connexion (12) des contacts (10).

6. Porte-contacts selon la revendication 5, dans lequel la butée (18) est conçue en forme de languette s'avançant hors des contacts (10).

7. Porte-contacts selon la revendication 1, dans lequel la partie (28) du corps isolant (26), sur laquelle est en appui l'extrémité de connexion (12) d'un contact (10), et/ou l'extrémité de connexion libre des contacts (12) sont arrondies ou aplaties sur la face frontale.

8. Porte-contacts selon la revendication 1, dans lequel les extrémités de connexion (12) sont enfichées sur le corps isolant (26).
